# EUROPÄISCHE PATENTSCHRIFT

(11) **EP 4 078 041 B1**
(45) Veröffentlichungstag und Bekanntmachung des Hinweises auf die Patenterteilung: **07.02.2024**
(21) Anmeldenummer: 20817270.0
(22) Anmeldetag: 01.12.2020
(51) Int. Cl.: F24F 12/00, F24F 11/65, F24F 110/10, F24F 110/12, F24F 110/20, F24F 110/22, F24F 140/30

(54) **LÜFTUNGSGERÄT UND VERFAHREN ZUR REGELUNG EINES LÜFTUNGSGERÄTES**
VENTILATION DEVICE AND METHOD OF CONTROLLING A VENTILATION DEVICE
DISPOSITIF DE VENTILATION ET PROCÉDÉ DE RÉGULATION D'UN DISPOSITIF DE VENTILATION

(30) Priorität: 20.12.2019 DE 102019008913
(43) Veröffentlichungstag der Anmeldung: 26.10.2022
(73) Patentinhaber: Stiebel Eltron GmbH & Co. KG, 37603 Holzminden (DE)
(72) Erfinder: BOXHAMMER, Dirk, 37603 Holzminden (DE); NEUGEBAUER, Johannes, 33609 Bielefeld (DE)
(86) Internationale Anmeldenummer: PCT/EP2020/084019
(87) Internationale Veröffentlichungsnummer: WO 2021/121945

(56) Entgegenhaltungen:
- WO-A1-2008/102999
- GB-A- 2 561 989
- US-A1- 2019 274 316

## Beschreibung

Die vorliegende Erfindung betrifft ein Lüftungsgerät, insbesondere ein zentrales Wohnungslüftungsgerät mit Wärmerückgewinnung, sowie ein zugehöriges Verfahren zur Regelung eines Lüftungsgerätes.

Lüftungsgeräte, insbesondere Wohnungslüftungsgeräte und besonders zentrale Geräte mit Wärmerückgewinnung, sind häufig mit einem Wärmeübertrager, auch Kreuzgegenstrom-Wärmeübertrager genannt, ausgestattet. In diesem Wärmeübertrager werden zwei Luftströme - der Abluftstrom und der Zuluftstrom durch viele kleine Kanäle aneinander vorbeigeführt, sodass ein Wärmeaustausch zwischen beiden Luftströmungen stattfindet. Im Winterfall ist die Außenluft im Zuluftstrom in der Regel kühler als die Abluft, sodass die Außenluft durch den Abluftstrom erwärmt wird (Wärmerückgewinnung). Der Abluftstrom kühlt sich dabei ab, sodass es, je nach Temperatur- und Luftfeuchtigkeitsverhältnissen, zu Kondensation im Wärmeübertrager kommen kann.

Auch im Sommerfall kann es zur Kondensation im Wärmeübertrager kommen. Wenn die Außenluft im Zuluftstrom wärmer als der Abluftstrom ist, dessen Temperatur beispielsweise durch Klimageräte im Wohnraum niedrig gehalten wird, kann bei hoher Außenluftfeuchte ebenfalls Kondensat im Gerät und im Wärmeübertrager anfallen.

Es ist daher Stand der Technik, dass Lüftungsgeräte mit Wärmerückgewinnung mit mindestens einem Kondensatablauf ausgestattet sind, um anfallendes Kondensat abzuführen. Häufig wird das Kondensat über einen Schlauch oder eine Kondensatpumpe in einem Sammelbehälter gesammelt oder in seltensten Fällen direkt in die Abwasserkanalisation geleitet.

Es ist auch bekannt, dass Lüftungsgeräte mit einem Enthalpie-Wärmeübertrager Temperatur und Feuchte zwischen den Luftströmen übertragen können, sodass die anfallende Kondensatmenge erheblich reduziert wird, bzw. je nach Einsatzbereich und Bauweise (Größe und Wirkungsgrad des Wärmeübertragers) des Lüftungsgeräts ein Kondensatablauf nicht mehr notwendig ist. Problematisch ist allerdings, dass die Außenluft- und Abluftbedingungen, sprich Temperatur und Luftfeuchtigkeit, schwer prognostizierbar sind, da sie vom Einsatzort, den Wetterbedingungen und dem Nutzerverhalten abhängen, sodass eine Abschätzung der zu erwartenden Kondensatmenge nur schwer möglich ist.

Zudem gibt es Einsatzorte, die eine (regelmäßige) Abfuhr von Kondensat nicht erlauben, wie zum Beispiel bei deckenhängenden Lüftungsgeräten oder Installationen an Orten ohne Abwasseranschluss.

Des Weiteren besteht die Gefahr, dass externe Sammelbehälter (Eimer) überlaufen können oder unterdimensioniert sind.

WO 2008/102999 A1 beschreibt eine Vorrichtung zur Verhinderung von Taukondensation in einem Wärmetauschlüfter und ein Steuerungsverfahren dafür, das eine Innen- und Außentemperatur und -feuchtigkeit in dem Wärmetauschlüfter misst und eine Taukondensationstemperatur unter Verwendung derselben berechnet, und dann wird der Lüfter automatisch betrieben, wenn die Innentemperatur die Taukondensationstemperatur erreicht, um die Innentemperatur zu steuern und dadurch Taukondensation zu verhindern. Die Vorrichtung umfasst: einen Wärmetauscher; einen Luftzufuhrventilator und einen Abluftventilator; einen ersten Temperatursensor und einen ersten Feuchtigkeitssensor; einen zweiten Temperatursensor und einen zweiten Feuchtigkeitssensor; eine Taukondensationstemperatur-Berechnungseinheit; und eine Steuereinheit.

GB 2 561 989 A beschreibt eine Belüftungsvorrichtung mit Wärmetauscher, umfassend: ein Gehäuse, das einen Luftzufuhrkanal und einen Luftabfuhrkanal umfasst; ein Luftzufuhrgebläse, das in dem Luftzufuhrkanal angeordnet ist und einen Luftzufuhrstrom zu dem Luftzufuhrkanal erzeugt; ein Luftabfuhrgebläse, das in dem Luftabfuhrkanal angeordnet ist und einen Luftabfuhrstrom zu dem Luftabfuhrkanal erzeugt; einen Wärmetauscher, der einen Wärmeaustausch zwischen dem Luftzufuhrstrom und dem Luftabfuhrstrom durch Schneiden des Luftzufuhrkanals und des Luftabfuhrkanals durchführt; und eine Ablaufwanne, die das Kondensat aus dem Wärmetauscher aufnimmt. Die Ablaufwanne umfasst eine zufuhrseitige Ablaufwanne, die auf der Auslassseite des Luftzufuhrstroms im Wärmetauscher angeordnet ist, eine abfuhrseitige Ablaufwanne, die auf der Auslassseite des Luftabfuhrstroms im Wärmetauscher angeordnet ist, und einen Wasserkanal, der die zufuhrseitige Ablaufwanne und die abfuhrseitige Ablaufwanne miteinander verbindet. Die abluftseitige Ablaufwanne umfasst einen Ablauf, der Kondenswasser zur Außenseite des Gehäuses ableitet.

US 2019/274316 A1 beschreibt eine intelligente Entfeuchtungsvorrichtung für ein Heißluftumlauf-Backsystem, die intern einen Kompressor, einen Kondensator, ein Drosselventil, einen Verdampfer, einen Gesamtwärmetauscher, eine Steuerung, ein Wärmeabfuhrgebläse, einen Flüssigkeitspegelsensor, einen Temperatur- und Feuchtigkeitssensor, ein Axialgebläse, ein Ablassmagnetventil, einen Kondensatsammelkasten und einen Temperatursensor umfasst und extern einen Entfeuchtungslufteinlass, einen Entfeuchtungsluftauslass, einen Frischlufteinlass, einen Wärmeabfuhrluftauslass und eine Kondensatabfuhröffnung umfasst. Effekte der vorliegenden Anwendung sind die Rückgewinnung der internen Zirkulationsabwärme, die emissionsfreie intelligente Entfeuchtung und die Erhaltung der nützlichen Inhaltsstoffe des Backprodukts für das Heißluft-Zirkulations-Backsystem während des Backvorgangs, und die Funktionen der Netzüberdruck- und Unterspannungserkennung und -schutz, des Kompressorüberhitzungsschutzes, des verzögerten Starts nach dem Abschalten des Kompressors und des automatischen Kondensatabflusses können erreicht werden.

Vor diesem Hintergrund war es eine Aufgabe, ein Lüftungsgerät dahingehend zu verbessern, dass der Umgang mit im Lüftungsgerät anfallendem Kondensat komfortabler ist.

Erfindungsgemäß wird ein Lüftungsgerät nach Anspruch 1 vorgeschlagen.

Durch die vorteilhafte Verwendung der Sensoren, nämlich des Zulufttemperatursensors, des Zuluftfeuchtesensors, des Ablufttemperatursensors und des Abluftfeuchtesensors, ist die Kondensatbestimmungseinheit in der Lage, zu bestimmen, ob und falls ja in welcher Menge Kondensat in dem Lüftungsgerät anfällt.

Hierbei ist unerheblich, wo in dem Zuluftstrang bzw. dem Abluftstrang die jeweiligen Temperatur- bzw. Feuchtesensoren angeordnet sind, so können die Temperatursensoren an dem gleichen Ort bezüglich des Wärmeübertragers oder auch an unterschiedlichen Orten, das heißt vor und/oder hinter dem Wärmeübertrager in Strömungsrichtung angeordnet sein. Besonders bevorzugt ist ein kombinierter Sensor, der sowohl die Temperatur als auch die Feuchte bestimmen kann, vorgesehen. Dadurch kann die Komplexität des Lüftungsgerätes verringert werden. Der Zuluftstrang umfasst insbesondere demnach die Außenluft vor dem Wärmeübertrager und die Zuluft nach dem Wärmeübertrager. Entsprechend umfasst der Abluftstrang insbesondere die Abluft vor dem Wärmeübertrager und die Fortluft nach dem Wärmeübertrager.

Vorzugsweise ist die Kondensatbestimmungseinheit dazu ausgebildet, die Daten des Zulufttemperatursensors, des Zuluftfeuchtesensors, des Ablufttemperatursensors und des Abluftfeuchtesensors mit hinterlegten Werten, insbesondere in Form von Stoffparametern, Taupunktlinien, hx-Diagrammen, zu vergleichen, um Kondensatanfall zu bestimmen.

Damit kann die Kondensatbestimmungseinheit präzise bestimmen, ob bei den aktuell gemessenen Werten Kondensat anfällt oder nicht. Beispielsweise weist die Kondensatbestimmungseinheit eine Speicherkomponente auf, von der die hinterlegten Werte abrufbar sind.

Demnach ist nicht nur möglich, Kondensatanfall festzustellen, d.h. zu bestimmen, ob Kondensat anfällt oder nicht, sondern zusätzlich die Menge des anfallenden Kondensates zu bestimmen. Damit kann beispielsweise ermöglicht werden, zu detektieren, falls ein Sammelbehälter, beispielsweise ein Eimer oder ein anderer externer Sammelbehälter, droht überzulaufen. Entsprechend kann das Lüftungsgerät bei drohendem oder einsetzendem Überlaufen des Sammelbehälters benachrichtigen und zusätzlich oder alternativ den Betrieb umstellen, so dass beispielsweise kein weiteres Kondensat anfällt.

In einem weiteren Fall kann das Lüftungsgerät den Betrieb anhalten, wenn die Menge des angefallenen Kondensats die Kapazität des Sammelbehälters übersteigt bzw. erreicht, so dass ein Überlaufen verhindert ist. Eine Leerung des Sammelbehälters kann automatisch detektiert oder von einem Benutzer bestätigt werden.

Hierbei wird besonders bevorzugt, dass ein gewisser Sicherheitsfaktor auf die Menge des bestimmten Kondensats aufgeschlagen wird, so dass die bestimmte Kondensatmenge von dem tatsächlich anfallenden Kondensat jedenfalls nicht überschritten wird.

Vorzugsweise implementiert die Regelungseinheit eine Betriebsart ohne Kondensatanfall, wobei die Regelungseinheit in dieser Betriebsart dazu ausgebildet ist, die Lüftungsanlage nur dann in einem Normalbetrieb zu betreiben, wenn weder im Zuluftstrang noch im Abluftstrang die Taupunkttemperatur, bestimmt durch Daten des Zulufttemperatursensors, des Zuluftfeuchtesensors, des Ablufttemperatursensors und des Abluftfeuchtesensors, unterschritten wird, und die Lüftungsanlage andernfalls insbesondere abzuschalten.

In einigen Betriebsarten kann ein gewisser Kondensatanfall akzeptiert werden, in anderen nicht. So kann in dieser bevorzugten Ausgestaltung, durch Auswertung der Sensoren, sichergestellt sein, dass gar kein Kondensat anfällt, wodurch entsprechend ein kondensatfreier Betrieb gewährleistet ist.

Vorzugsweise ist die Regelungseinheit in der Betriebsart ohne Kondensatanfall dazu ausgebildet, die Betriebszeit durch eine Volumenstromdisbalance zwischen dem Zuluftstrom und dem Abluftstrom und/oder durch eine Vorerwärmung wenigstens eines aus dem Zuluftstrom und dem Abluftstrom, insbesondere mittels eines internen und/oder externen Heizregisters, zu verlängern.

Durch die Volumenstromdisbalance kann verhindert werden, dass einer der beiden Ströme unter die Taupunkttemperatur abgekühlt wird und es dadurch zu Kondensatanfall kommt. Ähnlich kann die Temperatur durch eine Vorerwärmung über dem Taupunkt gehalten werden. Besonders bevorzugt kann sowohl die Volumenstromdisbalance als auch die Vorerwärmung zur Ausweitung des kondensatfreien Betriebs zum Einsatz kommen.

Vorzugsweise ist die Regelungseinheit dazu ausgebildet, die Lüftungsanlage standardmäßig in der Betriebsart ohne Kondensatanfall zu betreiben, bis eine Bestätigung, insbesondere durch einen Nutzer, darüber erfolgt, dass ein Kondensatablauf ordnungsgemäß montiert ist.

Durch diese Ausgestaltung kann ein in jedem Fall unschädlicher, d.h. ein kondensatfreier Betrieb, garantiert werden und lediglich für den Fall, in dem aktiv bestätigt wird, dass ein ordnungsgemäßer Kondensatablauf montiert ist, wird ein davon abweichender Betrieb erlaubt, nämlich ein solcher, in dem Kondensatanfall akzeptiert wird.

Vorzugsweise weist das Lüftungsgerät ferner einen Kondensatablauf mit einem Siphon auf, wobei die Kondensatbestimmungseinheit dazu ausgebildet ist, ein Austrocknen des Siphons zu bestimmen.

Hierbei kann die Kondensatbestimmungseinheit die benötigte Menge kennen oder bestimmen, die aus dem Siphon beispielsweise durch Verdunstung entweicht. Diese Menge muss an Kondensat anfallen, um ein Austrocknen zu verhindern. Wird die Menge an anfallendem Kondensat nicht erreicht, das heißt also, dass ein Austrocknen des Siphons droht, kann der Betrieb des Lüftungsgerätes angepasst werden, so dass mehr Kondensat anfällt, oder, alternativ oder zusätzlich, kann ein Benutzer aufgefordert werden, eine bestimmte Menge an Wasser in den Siphon einzuführen, um dem Austrocknen des Siphons vorzubeugen. Ein Austrocknen des Siphons führt beispielsweise dazu, dass unerwünschte Gerüche durch den Kondensatablauf entweichen können.

Vorzugsweise weist das Lüftungsgerät ferner eine Wetterdateneinheit zum Empfang, beispielsweise über das Internet, von Wetterdaten auf, wobei die Kondensatbestimmungseinheit dazu ausgebildet ist, das anfallende Kondensat ferner auf Grundlage der Wetterdaten zu bestimmen.

Die Kondensatbestimmungseinheit kann durch die Einbeziehung von Wetterdaten die Genauigkeit der Kondensatbestimmung erhöhen und sogar eine Vorhersage für in der nächsten Zeit zu erwartendes Kondensat treffen.

Vorzugsweise weist das Lüftungsgerät ferner eine Informationseinheit, insbesondere eine Anzeige der Lüftungsanlage und/oder eine Kommunikationsschnittstelle zur drahtlosen und/oder drahtgebundenen Kommunikation beispielsweise mit einem Endgerät eines Nutzers, auf, wobei die Informationseinheit dazu ausgebildet ist, Informationen über das Kondensat an den Nutzer zu kommunizieren.

Dem Nutzer kann beispielsweise kommuniziert werden, ob und, falls ja, in welcher Menge Kondensat anfällt. Ferner kann beispielsweise ein Füllstand eines vorgesehenen Sammelbehälters für Kondensat kommuniziert werden und/oder dass der Sammelbehälter seine Kapazitätsgrenze erreicht. Über die Informationseinheit kann der Nutzer vorzugsweise angeben, dass - und wenn ja - welche Art von Kondensatablauf an das Lüftungsgerät angeschlossen ist.

Vorzugsweise ist die Informationseinheit dazu ausgebildet, dem Nutzer auf Grundlage des bestimmten Kondensats wenigstens eine der folgenden Handlungsempfehlungen zu kommunizieren: i) Kondensatablauf anschließen, ii) Lüftungsgerät abstellen, iii) Wasser für einen Siphon nachfüllen, iv) Kondensatablauf lösen, v) Kondensatablauf leeren.

Die Handlungsempfehlungen können besonders bevorzugt nach Umsetzung durch den Nutzer von dem Lüftungsgerät automatisch detektiert oder über eine Bestätigung in die Informationseinheit von dem Nutzer manuell eingegeben und von dem Lüftungsgerät erfasst werden.

In einem weiteren Aspekt wird ein Verfahren zur Regelung eines Lüftungsgerätes nach Anspruch 10 vorgeschlagen.

Durch das erfindungsgemäße Verfahren zur Regelung des Lüftungsgerätes werden die gleichen Vorteile erreicht, die ausführlich mit Verweis auf das Lüftungsgerät beschrieben sind. Auch ist das Verfahren analog auf die als bevorzugt beschriebenen Ausführungsformen des Lüftungsgerätes entsprechend erweiterbar.

Weitere Vorteile und Ausgestaltungen werden nachfolgend mit Verweis auf die beigefügten Figuren beschrieben. Hierbei zeigen:
Fig. 1 schematisch und exemplarisch ein Lüftungsgerät und
Fig. 2 schematisch und exemplarisch ein Lüftungsgerät mit Kondensatablauf.

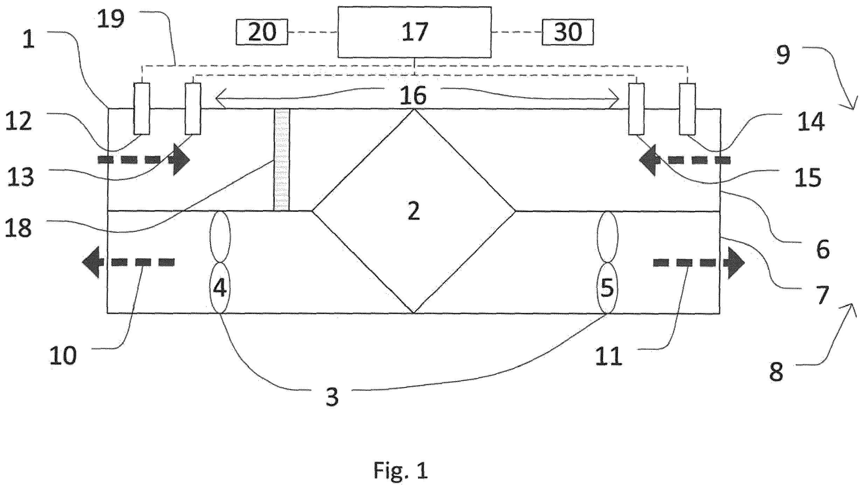

Fig. 1 zeigt schematisch und exemplarisch ein Lüftungsgerät 1. Das Lüftungsgerät 1 dient dazu, Zuluft von der einen Luftseite des Lüftungsgeräts 1, nämlich der Zuluftseite 8 anzusaugen und zur anderen Luftseite der Lüftungsgerät 1, nämlich der Abluft- oder Raumseite 9 zu fördern, und zwar im Austausch gegen Abluft, die in umgekehrter Richtung von der Abluftseite 9 zur Zuluftseite 8 gefördert wird. Das Lüftungsgerät 1 dient also dazu, einen in der Fig. 1 nicht näher dargestellten Raum oder einen Teil hiervon im Austausch gegen verbrauchte Raumluft mit Zuluft, vorzugsweise mit Frischluft zu versorgen.

Zum Zwecke der Zuführung von Zuluft einerseits bzw. der Abführung von Abluft andererseits ist eine Ventilatoreinrichtung 3 vorgesehen. Im gezeigten Ausführungsbeispiel umfasst die Ventilatoreinrichtung 3 zwei Ventilatoren 4 und 5, wobei der Ventilator 4 dazu dient, die Abluft zu fördern, wohingegen der Ventilator 5 für die Förderung der Zuluft vorgesehen ist. Dementsprechend sind auch der Ventilator 4 im Abluftstrang 6 und der Ventilator 5 im Zuluftstrang 7 angeordnet.

Der Abluftstrom der Abluft und der Zuluftstrom der Zuluft werden in diesem Beispiel in einem als Kreuzgegenstromwärmeübertrager ausgeführten Wärmeübertrager 2 aneinander vorbeigeführt. Natürlich sind auch andere Formen von Wärmeübertragern einsetzbar.

Dabei findet zum Zwecke der Energieeinsparung ein Wärmetransfer innerhalb des Wärmeübertragers 2 statt, und zwar von der Abluft auf die Frischluft, falls die Frischluft kühler als die Abluft ist, bzw. in umgekehrter Richtung, das heißt von der Frischluft auf die Abluft, sofern die Frischluft wärmer als die Abluft ist. Ein Wärmeübergang von der Abluft auf die Frischluft findet insbesondere bei vergleichsweiser kühler Frischluft, das heißt während der kühlen Jahreszeit statt, wohingegen ein Wärmetransfer in umgekehrter Richtung, das heißt von wärmerer Frischluft auf kühlere Abluft insbesondere während wärmerer Jahreszeiten, beispielsweise im Sommer stattfindet. Die durch die Ventilatoreinrichtung 3 bewirkte Luftströmung sowohl hinsichtlich der Zuluft als auch bezüglich der Abluft ist in Fig. 1 durch Pfeile 10 und 11 kenntlich gemacht, wobei der Pfeil 10 die Strömungsrichtung der Abluft kennzeichnet und der Pfeil 11 die Strömungsrichtung der Zuluft.

Das Lüftungsgerät 1 weist weiter eine Heizeinrichtung in Form einer Heizeinrichtung 18, das in Strömungsrichtung der Zuluft dem Wärmeübertrager 2 vorgeschaltet ist, auf. Die Heizeinrichtung 18 kann die Zuluft im Bedarfsfall aufwärmen, und zwar insbesondere zum Zwecke des Frostschutzes, um beispielsweise an kalten Wintertagen ein Einfrieren des Wärmeübertragers 2 und/oder anderer luftführender Baukomponenten des Lüftungsgeräts, wie zum Beispiel den Abluftstrang 6 oder den Zuluftstrang 7 verhindern zu können. Wie nachfolgend beschrieben kann in einigen Betriebsmodi durch die Heizeinrichtung 18 auch gewährleistet sein, dass die Vorerwärmung einen Kondensatanfall verzögert oder verhindert.

Das Lüftungsgerät weist ferner eine Messeinrichtung 16, die zumindest einen Zulufttemperatursensor 12 und einen Zuluftfeuchtesensor 13, die im Zuluftstrang 7 angeordnet sind sowie einen Ablufttemperatursensor 14 und einen Abluftfeuchtesensor 15, die im Abluftstrang 6 angeordnet sind, auf.

Gemäß dem gezeigten Ausführungsbeispiel sind ein Zulufttemperatursensor 12 und ein Zuluftfeuchtesensor 13 hinsichtlich der Zuluft sowie ein Ablufttemperatursensor 14 und ein Abluftfeuchtesensor 15 für die Abluft vorgesehen. Die Feuchtesensoren 13, 15 sind dazu ausgebildet eine Luftfeuchtigkeit der Zuluft bzw. der Abluft zu bestimmen. Die Sensoren 12 und 13 sind in Strömungsrichtung der Zuluft im Zuluftstrang 7 vor dem Wärmeübertrager 2 angeordnet. Die Sensoren 14 und 15 bezüglich der Abluft sind in Strömungsrichtung der Abluft dem Wärmeübertrager 2 ebenfalls vorgeschaltet. Die Anordnung der Sensoren 12, 13, 14 und 15 bezüglich des Wärmeübertragers 2 kann auch abgewandelt werden, wobei auch je einer der beiden Sensoren 12, 13 bzw. 14, 15 auf je einer der beiden Seiten des Wärmeübertragers 2 angeordnet sein kann. Das Vorsehen beider Sensoren 12, 13 bzw. 14, 15 auf der gleichen Seite des Wärmeübertragers 2, vorzugsweise als ein kombiniertes Bauteil, bringt fertigungstechnisch Vorteile mit sich.

Die Sensoren 12, 13, 14 und 15 stehen in kommunikationstechnischer Verbindung 19 mit einer Regelungseinrichtung 17, in der die erfindungsgemäße Kondensatbestimmungseinheit enthalten ist. Die Regelungseinrichtung mit Kondensatbestimmungseinheit 17 ist ihrerseits wiederum kommunikationstechnisch mit der Heizeinrichtung 18 und der Ventilatoreinrichtung 3 gekoppelt.

Die mittels der Messeinrichtung 16 erfassten Messwerte werden in einer Vergleichsschaltung oder einer anderen Auswerteeinrichtung, beispielsweise einem Prozessor, der Regelungseinrichtung mit Kondensatbestimmungseinheit 17 mit vorgebbaren Vergleichswerten verglichen. In Abhängigkeit des Vergleichsergebnisses stellt die Kondensatbestimmungseinheit fest, ob Kondensat anfällt oder nicht.

Vorzugsweise ist die Kondensatbestimmungseinheit bzw. die Regelungseinrichtung mit Kondensatbestimmungseinheit 17 hierzu ausgebildet, die Messwerte der Sensoren 12, 13, 14 und 15 mit hinterlegten Werten, insbesondere in Form von Stoffparametern, Taupunktlinien, hx-Diagrammen, zu vergleichen, um Kondensatanfall zu bestimmen. In Abhängigkeit des Vergleichsergebnisses erfolgt der Betrieb des Lüftungsgerätes 1, beispielsweise der Heizeinrichtung 18 und/oder eine Einstellung der Ventilatoreinrichtung 3.

Das Lüftungsgerät 1 weist ferner eine Wetterdateneinheit 20 zum Empfang, beispielsweise über das Internet, von Wetterdaten, sowie eine Informationseinheit 30, insbesondere eine Anzeige des Lüftungsgeräts 1 und/oder eine Kommunikationsschnittstelle zur drahtlosen und/oder drahtgebundenen Kommunikation beispielsweise mit einem Endgerät eines Nutzers, auf. Der Nutzer kann insbesondere mit der Informationseinheit 30 interagieren.

Erfindungsgemäß kann demnach durch die Anordnung von mindestens einem Temperatur- und Feuchtesensor in dem Abluftstrang 6 und dem Zuluftstrang 7 sowie durch Auswertung der gemessenen Temperaturen und Luftfeuchtigkeiten sowie Ab- bzw. Vergleich beispielsweise mit hinterlegten Werten (Stoffparameter, Taupunktlinie, hx-Diagramm etc.) erkannt werden, wann Kondensat im Wärmeübertrager 2 anfällt.

Da der geförderte Volumenstrom bzw. Massenstrom der geförderten Luft über eine Steuerung der Ventilatoreinrichtung 3 einstellbar und damit der Regelungseinrichtung mit Kondensatbestimmungseinheit 17 bekannt ist, kann auch die Menge des anfallenden Kondensats über der Betriebsdauer berechnet und insbesondere protokolliert bzw. aufgezeichnet werden.

Somit ist es möglich, das Lüftungsgerät 1 in Abhängigkeit der angefallenen Kondensatmenge zu regeln.

Besonders vorteilhaft ist es, wenn die maximal erlaubte Kondensatmenge im Lüftungsgerät 1 durch den Nutzer einstellbar ist.

Weiterhin vorteilhaft ist es, wenn die Elektronik den Nutzer des Lüftungsgerätes über das anfallende Kondensat, beispielsweise über eine optische Mitteilung im Display der Anlage, in Kenntnis setzt. Hierfür ist besonders die Informationseinheit 30 vorgesehen.

Es ist ebenfalls von Vorteil die beispielsweise mittels der Informationseinheit 30 angegebene Kondensatmenge mit einem Sicherheitsfaktor zu beaufschlagen, um Berechnungsungenauigkeiten bedingt durch Messtoleranzen, Temperaturschwankungen, Sensorträgheiten, Näherungswerte der Stoffparameter, etc., vorzubeugen.

Weiterhin soll durch die Auswertung der Sensoren 12, 13, 14 und 15 auch eine Betriebsart ohne Kondensatanfall möglich sein. In diesem Modus läuft das Lüftungsgerät 1 nur im Normalbetrieb, wenn, bedingt durch das erfasste Temperatur-Feuchteverhältnis die Taupunkttemperatur weder im Abluftstrang 6 noch im Zuluftstrang 7 unterschritten wird. Andernfalls schaltet sich das Lüftungsgerät 1 aus.

Optional kann durch eine Volumenstromdisbalance oder durch eine gezielte Vorerwärmung eines Luftstroms beispielsweise durch ein internes oder externes Heizregister, wie die Heizeinrichtung 18, die Betriebszeit verlängert werden.

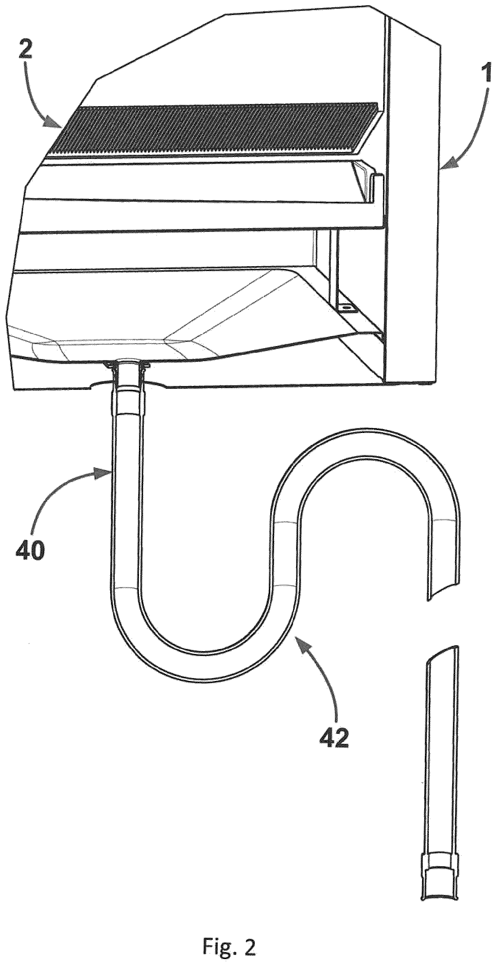

Besonders vorteilhaft ist es, wenn diese kondensatfreie Betriebsart ausgeführt wird, solange der Nutzer nicht bestätigt hat, dass der Kondensatablauf 40, vgl. Fig. 2, ordnungsgemäß montiert ist, sodass keinesfalls Kondensat, bei nicht ordnungsgemäßer Inbetriebnahme, anfällt.

Der Kondensatablauf 40 kann im Zuluftstrang 7 und/oder im Abluftstrang 6 montiert sein, was je nach Einsatzort und/oder Einsatzzweck zu bestimmen ist.

Die Erfindung kann auch dazu verwendet werden, um den Nutzer des Lüftungsgeräts 1 auf die Gefahr eines ausgetrockneten Siphons 42 des Kondensatablaufs 40, vgl. Fig. 2, hinzuweisen. Durch die Erfindung sind die Zeiträume an denen Kondensat anfällt und auch die Menge an Kondensat bekannt. Im Umkehrschluss kann somit auch erkannt werden, wenn über einen längeren Zeitraum nur wenig bzw. kein Kondensat angefallen ist. Durch die Auswertung der Sensorwerte und unter zur Hilfenahme von empirisch ermittelten Faktoren kann ein ungefährer Zeitpunkt ermittelt werden, wann der Siphon 42 ausgetrocknet ist.

In einer besonders vorteilhaften Ausführungsform können auch standortabhängige Wetterdaten ausgewertet werden, um eine genauere Vorhersage zu treffen, wofür bevorzugt die Wetterdateneinheit 20 zum Einsatz kommt.

### Beispiel 1:

Steht als externen Sammelbehälter für anfallendes Kondensat ein 10 Liter-Eimer zur Verfügung, kann dieses Volumen in der Software des Lüftungsgeräts 1, beispielsweise in der Regelungseinrichtung mit Kondensatbestimmungseinheit 17, hinterlegt werden.

Das Lüftungsgerät 1 läuft dann solange im eingestellten Normalbetrieb, bis ein Kondensat-Volumen von 10 Litern zuzüglich Sicherheitsvolumen (Sicherheitsfaktor) angefallen ist.

Nun schaltet sich das Lüftungsgerät 1 entweder aus, oder fährt in einer Betriebsart, in der kein Kondensat mehr anfällt, das heißt die Taupunkttemperatur an keiner Stelle unterschritten wird. Dies kann zum Beispiel durch ein günstiges Temperatur-/Feuchteverhältnis bedingt sein, oder durch die Zunahme der Heizeinrichtung 18 oder durch eine Volumenstromdisbalance erfolgen.

Nacht Entleeren des Sammelbehälters kann die erfasste Kondensatmenge im Lüftungsgerät zurückgesetzt werden, beispielsweise durch den Nutzer über die Informationseinheit 30.

### Beispiel 2:

Fig. 2 zeigt schematisch ein Lüftungsgerät 1 mit einem Kondensatablauf 40, an dem ein Schlauch befestigt wird, um das Kondensat in die Abwasserkanalisation oder in einen Sammelbehälter zu führen. Um eine Luftdichtigkeit zu gewährleisten, wird der Schlauch in einer liegenden S-Schlaufe in Form eines Siphons 42 geführt und bei der Inbetriebnahme mit Wasser gefüllt.

Damit wird verhindert, dass bei bestehendem Unterdruck Luft über den Kondensatablauf 40 angesaugt wird. Im Winterfall bleibt der Siphon 42 durch regelmäßig anfallendes Kondensat mit Wasser gefüllt. Wird jedoch ein Enthalpie-Wärmeübertrager als Wärmeübertrager 2 eingesetzt oder liegen über längeren Zeitraum trockene Luftverhältnisse vor, sodass wenig bis kein Kondensat anfällt (Sommerfall), kann der Siphon 42 austrocknen.

Die Software der Regelungseinrichtung mit Kondensatbestimmungseinheit 17 wertet die Temperatur- und Feuchtigkeitswerte über einen langen Zeitraum aus und bestimmt einen ungefähren Zeitpunkt, wann der Kondensatablauf 40 ausgetrocknet sein müsste, um beispielsweise den Nutzer über die Informationseinheit (30) zu warnen.

### Beispiel 3:

Beim Betrieb des Lüftungsgeräts 1 in kritischen Klimabedingungen in einigen Regionen der Erde müssen zwei Kondensatabläufe integriert werden - für die Außenluft und für die Fortluft.

Zwei Kondensatabläufe führen allerdings zu doppeltem Wartungsaufwand. Zudem kann ein mit Wasser gefüllter Siphon 42 Schimmelbildung fördern, was gerade für einen Kondensatablauf im Zuluftstrang kritisch ist, da die Luft direkt in den Wohnraum gefördert wird. Je nach Aufstellort kann es daher möglich sein, dass ein zweiter Kondensatablauf (insbesondere in der Außenluft) nicht notwendig ist.

Die Erfindung bietet die Möglichkeit, den zweiten Kondensatablauf für die Außenluft bei Inbetriebnahme zu verschließen. Das Lüftungsgerät 1 läuft solange im eingestellten Betrieb, bis die Gefahr besteht, dass auch Kondensat im Außenluftkanal anfällt. Dies wird über die erfindungsgemäße Regelung erkannt.

Besteht die Gefahr das Kondensat anfällt, fährt das Lüftungsgerät 1 herunter und weist den Nutzer darauf hin, den Kondensatablauf für die Außenluft ordnungsgemäß zu installieren. Dieses Verfahren kann auch für den Kondensatablauf der Fortluft angewendet werden. Somit wird der Kondensatablauf nur genutzt, wenn es auch erforderlich ist.

### Bezugszeichen:

- 1: Lüftungsgerät
- 2: Wärmeübertrager
- 3: Ventilatoreinrichtung
- 4: Ventilator
- 5: Ventilator
- 6: Abluftstrang
- 7: Zuluftstrang
- 8: Zuluftseite
- 9: Abluftseite (Raumseite)
- 10,11: Strömungsrichtung
- 12: Zulufttemperatursensor
- 13: Zuluftfeuchtesensor
- 14: Ablufttemperatursensor
- 15: Abluftfeuchtesensor
- 16: Messeinrichtung
- 17: Regelungseinrichtung mit Kondensatbestimmungseinheit
- 18: Heizeinrichtung
- 19: Kommunikationstechnische Verbindung
- 20: Wetterdateneinheit
- 30: Informationseinheit
- 40: Kondensatablauf
- 42: Siphon

## Patentansprüche

1. Lüftungsgerät (1), insbesondere zentrales Wohnungslüftungsgerät mit Wärmerückgewinnung, umfassend
- einen Zuluftstrang (7),
- einen Abluftstrang (6),
- einen Wärmeübertrager (2) zur Übertragung von Wärme zwischen einem Zuluftstrom des Zuluftstrangs (7) und einem Abluftstrom des Abluftstrangs (6),
- einen Zulufttemperatursensor (12) und einen Zuluftfeuchtesensor (13), die im Zuluftstrang (7) angeordnet sind,
- einen Ablufttemperatursensor (14) und einen Abluftfeuchtesensor (15), die im Abluftstrang (6) angeordnet sind,
- eine Regelungseinrichtung mit Kondensatbestimmungseinheit (17), die dazu ausgebildet ist, anfallendes Kondensat auf Grundlage von Daten des Zulufttemperatursensors (12), des Zuluftfeuchtesensors (13), des Ablufttemperatursensors (14) und des Abluftfeuchtesensors (15) zu bestimmen, wobei die Regelungseinrichtung mit Kondensatbestimmungseinheit (17) zum Regeln des Lüftungsgerätes (1) ausgebildet ist, wobei die Regelungseinheit dazu eingerichtet ist, das Lüftungsgerät (1) auf Grundlage des von der Regelungseinrichtung mit Kondensatbestimmungseinheit (17) bestimmten Kondensats zu regeln, **dadurch gekennzeichnet, dass**
ein Volumenstrom der durch das Lüftungsgerät (1) geförderten Luft einstellbar ist und der Regelungseinrichtung mit Kondensatbestimmungseinheit (17) bereitgestellt wird, wobei die Regelungseinrichtung mit Kondensatbestimmungseinheit (17) dazu ausgebildet ist, auf Grundlage des Volumenstroms eine Menge anfallenden Kondensats zu bestimmen.

2. Lüftungsgerät (1) nach Anspruch 1, wobei die Regelungseinrichtung mit Kondensatbestimmungseinheit (17) dazu ausgebildet ist, die Daten des Zulufttemperatursensors (12), des Zuluftfeuchtesensors (13), des Ablufttemperatursensors (14) und des Abluftfeuchtesensors (15) mit hinterlegten Werten, insbesondere in Form von Stoffparametern, Taupunktlinien, hx-Diagrammen, zu vergleichen, um Kondensatanfall zu bestimmen.

3. Lüftungsgerät (1) nach einem der vorstehenden Ansprüche, wobei die Regelungseinrichtung mit Kondensatbestimmungseinheit (17) eine Betriebsart ohne Kondensatanfall implementiert, wobei die Regelungseinrichtung mit Kondensatbestimmungseinheit (17) in dieser Betriebsart dazu ausgebildet ist, das Lüftungsgerät (1) nur dann in einem Normalbetrieb zu betreiben, wenn weder im Zuluftstrang (7) noch im Abluftstrang (6) die Taupunkttemperatur, bestimmt durch Daten des Zulufttemperatursensors (12), des Zuluftfeuchtesensors (13), des Ablufttemperatursensors (14) und des Abluftfeuchtesensors (15), unterschritten wird, und das Lüftungsgerät (1) andernfalls insbesondere abzuschalten.

4. Lüftungsgerät (1) nach Anspruch 3, wobei die Regelungseinrichtung mit Kondensatbestimmungseinheit (17) in der Betriebsart ohne Kondensatanfall dazu ausgebildet ist, die Betriebszeit durch eine Volumenstromdisbalance zwischen Zuluftstrom und Abluftstrom und/oder durch eine Vorerwärmung wenigstens eines aus dem Zuluftstrom und dem Abluftstrom, insbesondere mittels einer internen und/oder externen Heizeinrichtung (18), zu verlängern.

5. Lüftungsgerät (1) nach Anspruch 3 oder 4, wobei die Regelungseinrichtung mit Kondensatbestimmungseinheit (17) dazu ausgebildet ist, das Lüftungsgerät (1) standardmäßig in der Betriebsart ohne Kondensatanfall zu betreiben, wobei die Regelungseinrichtung mit Kondensatbestimmungseinheit (17) ferner dazu ausgebildet ist, eine davon abweichende Betriebsart, in der Kondensatanfall akzeptiert wird, zuzulassen, nachdem eine Bestätigung, insbesondere durch einen Nutzer, darüber erfolgt, dass ein Kondensatablauf (40) ordnungsgemäß montiert ist.

6. Lüftungsgerät (1) nach einem der vorstehenden Ansprüche, die ferner einen Kondensatablauf (40) mit einem Siphon (42) aufweist, wobei die Regelungseinrichtung mit Kondensatbestimmungseinheit (17) dazu ausgebildet ist, ein Austrocknen des Siphons (42) zu bestimmen.

7. Lüftungsgerät (1) nach einem der vorstehenden Ansprüche, wobei das Lüftungsgerät (1) ferner eine Wetterdateneinheit (20) zum Empfang, beispielsweise über das Internet, von Wetterdaten aufweist, wobei die Regelungseinrichtung mit Kondensatbestimmungseinheit (17) dazu ausgebildet ist, das anfallende Kondensat ferner auf Grundlage der Wetterdaten zu bestimmen.

8. Lüftungsgerät (1) nach einem der vorstehenden Ansprüche, die ferner eine Informationseinheit (30), insbesondere eine Anzeige des Lüftungsgeräts (1) und/oder eine Kommunikationsschnittstelle zur drahtlosen und/oder drahtgebundenen Kommunikation beispielsweise mit einem Endgerät eines Nutzers, aufweist, wobei die Informationseinheit (30) dazu ausgebildet ist, Informationen über das Kondensat an den Nutzer zu kommunizieren.

9. Lüftungsgerät (1) nach Anspruch 8, wobei die Informationseinheit (30) dazu ausgebildet ist, dem Nutzer auf Grundlage des bestimmten Kondensats wenigstens eine der folgenden Handlungsempfehlungen zu kommunizieren:
- Kondensatablauf (40) anschließen,
- Lüftungsgerät (1) abstellen,
- Wasser für einen Siphon (42) nachfüllen,
- Kondensatablauf (40) lösen,
- Kondensatablauf (40) leeren.

10. Verfahren zur Regelung eines Lüftungsgerätes (1), insbesondere eines zentralen Wohnungslüftungsgeräts mit Wärmerückgewinnung, umfassend
- einen Zuluftstrang (7),
- einen Abluftstrang (6),
- einen Wärmeübertrager (2) zur Übertragung von Wärme zwischen einem Zuluftstrom des Zuluftstrangs (7) und einem Abluftstrom des Abluftstrangs (6),
- einen Zulufttemperatursensor (12) und einen Zuluftfeuchtesensor (13), die im Zuluftstrang (7) angeordnet sind,
- einen Ablufttemperatursensor (14) und einen Abluftfeuchtesensor (15), die im Abluftstrang (6) angeordnet sind,
- eine Regelungseinrichtung mit Kondensatbestimmungseinheit (17), die anfallendes Kondensat auf Grundlage von Daten des Zulufttemperatursensors (12), des Zuluftfeuchtesensors (13), des Ablufttemperatursensors (14) und des Abluftfeuchtesensors (15) bestimmt,wobei das Lüftungsgerät (1) auf Grundlage des von der Regelungseinrichtung mit Kondensatbestimmungseinheit (17) bestimmten, anfallenden Kondensats geregelt wird , wobei die Regelungseinrichtung mit Kondensatbestimmungseinheit (17) zum Regeln des Lüftungsgerätes (1) ausgebildet ist, wobei die Regelungseinheit dazu eingerichtet ist, das Lüftungsgerät (1) auf Grundlage des von der Regelungseinrichtung mit Kondensatbestimmungseinheit (17) bestimmten Kondensats zu regeln, **dadurch gekennzeichnet, dass**
ein Volumenstrom der durch das Lüftungsgerät (1) geförderten Luft einstellbar ist und der Regelungseinrichtung mit Kondensatbestimmungseinheit (17) bereitgestellt wird, wobei die Regelungseinrichtung mit Kondensatbestimmungseinheit (17) dazu ausgebildet ist, auf Grundlage des Volumenstroms eine Menge anfallenden Kondensats zu bestimmen.

## Claims

1. Ventilation unit (1), in particular a central domestic ventilation unit with heat recovery, comprising
- a supply air duct (7),
- an extract air duct (6),
- a heat exchanger (2) for transferring heat between a supply air stream of the supply air duct (7) and an extract air stream of the extract air duct (6),
- a supply air temperature sensor (12) and a supply air humidity sensor (13), which are arranged in the supply air duct (7),
- an extract air temperature sensor (14) and an extract air humidity sensor (15), which are arranged in the extract air duct (6),
- a control device with a condensate determination unit (17), which is configured to determine accumulating condensate on the basis of data from the supply air temperature sensor (12), the supply air humidity sensor (13), the extract air temperature sensor (14) and the extract air humidity sensor (15), wherein the control device with condensate determination unit (17) is configured for controlling the ventilation unit (1), wherein the control unit is configured to control the ventilation unit (1) on the basis of the condensate determined by the control device with condensate determination unit (17), **characterised in that**
a volumetric flow rate of the air conveyed by the ventilation unit (1) is adjustable and is provided to the control device with condensate determination unit (17), wherein the control device with condensate determination unit (17) is configured to determine an amount of accumulating condensate on the basis of the volumetric flow rate.

2. Ventilation unit (1) according to claim 1, wherein the control device with condensate determination unit (17) is configured to compare the data of the supply air temperature sensor (12), the supply air humidity sensor (13), the extract air temperature sensor (14) and the extract air humidity sensor (15) with stored values, in particular in the form of material parameters, dew point lines, h-x diagrams, in order to determine condensate accumulation.

3. Ventilation unit (1) according to any one of the preceding claims, wherein the control device with condensate determination unit (17) implements an operating mode without condensate accumulation, wherein the control device with condensate determination unit (17) in this operating mode is configured to operate the ventilation unit (1) in a normal mode only if neither in the supply air duct (7) nor in the extract air duct (6) the dew point temperature, determined by data from the supply air temperature sensor (12), the supply air humidity sensor (13), the extract air temperature sensor (14) and the extract air humidity sensor (15), is undershot, and otherwise in particular to switch off the ventilation unit (1).

4. Ventilation unit (1) according to claim 3, wherein the control device with condensate determination unit (17) in the operating mode without condensate accumulation is configured to extend the operating time by a volumetric flow rate imbalance between the supply air stream and extract air stream and/or by preheating at least one of the supply air stream and the extract air stream, in particular by means of an internal and/or external heating device (18).

5. Ventilation unit (1) according to claim 3 or 4, wherein the control device with condensate determination unit (17) is configured to operate the ventilation unit (1) as standard in the operating mode without condensate accumulation, wherein the control device with condensate determination unit (17) is further configured to permit an operating mode deviating therefrom in which the condensate accumulation is accepted, after a confirmation, in particular by a user, that a condensate drain (40) is correctly mounted.

6. Ventilation unit (1) according to any one of the preceding claims, which further comprises a condensate drain (40) with a siphon (42), wherein the control device with condensate determination unit (17) is configured to determine any drying out of the siphon (42).

7. Ventilation unit (1) according to any one of the preceding claims, wherein the ventilation unit (1) further comprises a weather data unit (20) for receiving weather data, for example via the internet, wherein the control device with condensate determination unit (17) is configured to further determine the accumulating condensate on the basis of the weather data.

8. Ventilation unit (1) according to any one of the preceding claims, which further comprises an information unit (30), in particular a display of the ventilation unit (1) and/or a communication interface for wireless and/or wired communication for example with an end device of a user, wherein the information unit (30) is configured to communicate information about the condensate to the user.

9. Ventilation unit (1) according to claim 8, wherein the information unit (30) is configured to communicate at least one of the following recommended actions to the user on the basis of the determined condensate:
- connect condensate drain (40),
- shut down ventilation unit (1),
- refill water for a siphon (42),
- disconnect condensate drain (40),
- empty condensate drain (40).

10. Method for controlling a ventilation unit (1), in particular a central domestic ventilation unit with heat recovery, comprising
- a supply air duct (7),
- an extract air duct (6),
- a heat exchanger (2) for transferring heat between a supply air stream of the supply air duct (7) and an extract air stream of the extract air duct (6),
- a supply air temperature sensor (12) and a supply air humidity sensor (13), which are arranged in the supply air duct (7),
- an extract air temperature sensor (14) and an extract air humidity sensor (15), which are arranged in the extract air duct (6),
- a control device with condensate determination unit (17), which determines accumulating condensate on the basis of data from the supply air temperature sensor (12), the supply air humidity sensor (13), the extract air temperature sensor (14) and the extract air humidity sensor (15), wherein the ventilation unit (1) is controlled on the basis of the accumulating condensate determined by the control device with condensate determination unit (17), wherein the control device with condensate determination unit (17) is configured for controlling the ventilation unit (1), wherein the control unit is configured to control the ventilation unit (1) on the basis of the condensate determined by the control device with condensate determination unit (17), **characterised in that**
a volumetric flow rate of the air conveyed by the ventilation unit (1) is adjustable and is provided to the control device with condensate determination unit (17), wherein the control device with condensate determination unit (17) is configured to determine an amount of accumulating condensate on the basis of the volumetric flow rate.

## Revendications

1. Dispositif de ventilation (1), en particulier dispositif central de ventilation résidentiel avec récupération de chaleur, comprenant
- une voie d'air entrant (7),
- une voie d'air sortant (6),
- un échangeur de chaleur (2) destiné à la transmission de chaleur entre un flux d'air entrant de la voie d'air entrant (7) et un flux d'air sortant de la voie d'air sortant (6),
- un capteur de température d'air entrant (12) et un capteur d'humidité d'air entrant (13) qui sont disposés dans la voie d'air entrant (7),
- un capteur de température d'air sortant (14) et un capteur d'humidité d'air sortant (15) qui sont disposés dans la voie d'air sortant (6),
- un système de régulation avec unité de détermination de condensat (17), qui est conçu pour déterminer la formation de condensat en fonction de données du capteur de température d'air entrant (12), du capteur d'humidité d'air entrant (13), du capteur de température d'air sortant (14) et du capteur d'humidité d'air sortant (15), le système de régulation avec unité de détermination de condensat (17) étant conçu pour réguler le dispositif de ventilation (1), l'unité de régulation étant configurée pour réguler le dispositif de ventilation (1) en fonction du condensat déterminé par le système de régulation avec unité de détermination de condensat (17), **caractérisé en ce que**
le débit volumique de l'air transporté dans le dispositif de ventilation (1) est réglable et est fourni au système de régulation avec unité de détermination de condensat (17), le système de régulation avec unité de détermination de condensat (17) étant conçu pour déterminer une quantité de formation de condensat en fonction du débit volumique.

2. Dispositif de ventilation (1) selon la revendication 1, dans lequel le système de régulation avec unité de détermination de condensat (17) est conçu pour comparer les données du capteur de température d'air entrant (12), du capteur d'humidité d'air entrant (13), du capteur de température d'air sortant (14) et du capteur d'humidité d'air sortant (15) à des valeurs enregistrées, en particulier sous la forme de paramètres physiques, de courbes de point de rosée, de diagrammes h-x, pour déterminer la formation de condensat.

3. Dispositif de ventilation (1) selon l'une des revendications précédentes, dans lequel le système de régulation avec unité de détermination de condensat (17) met en oeuvre un mode de fonctionnement sans formation de condensat, le système de régulation avec unité de détermination de condensat (17) étant conçu, dans ce mode de fonctionnement, pour exploiter le dispositif de ventilation (1) en fonctionnement normal uniquement lorsque l'on ne passe en dessous de la température du point de rosée, déterminée à partir de données du capteur de température d'air entrant (12), du capteur d'humidité d'air entrant (13), du capteur de température d'air sortant (14) et du capteur d'humidité d'air sortant (15), ni dans la voie d'air entrant (7), ni dans la voie d'air sortant (6), et, dans le cas contraire, notamment pour désactiver le dispositif de ventilation (1).

4. Dispositif de ventilation (1) selon la revendication 3, dans lequel le système de régulation avec unité de détermination de condensat (17) est conçu, dans le mode de fonctionnement sans formation de condensat, pour prolonger le temps de service par un déséquilibre de débit volumique entre le flux d'air entrant et le flux d'air sortant et/ou par un préchauffage du flux d'air entrant et/ou du flux d'air sortant, en particulier au moyen d'un système de chauffage (18) interne et/ou externe.

5. Dispositif de ventilation (1) selon la revendication 3 ou 4, dans lequel le système de régulation avec unité de détermination de condensat (17) est conçu pour exploiter le dispositif de ventilation (1) par défaut dans le mode de fonctionnement sans formation de condensat, le système de régulation avec unité de détermination de condensat (17) étant en outre conçu pour autoriser un mode de fonctionnement différent, dans lequel la formation de condensat est acceptée, après confirmation, en particulier par un utilisateur, qu'une évacuation de condensat (40) est correctement montée.

6. Dispositif de ventilation (1) selon l'une des revendications précédentes, qui présente en outre une évacuation de condensat (40) avec un siphon (42), le système de régulation avec unité de détermination de condensat (17) étant conçu pour déterminer un assèchement du siphon (42).

7. Dispositif de ventilation (1) selon l'une des revendications précédentes, le dispositif de ventilation (1) présentant en outre une unité de données météorologiques (20) destinée à recevoir, par exemple par le biais d'Internet, des données météorologiques, le système de régulation avec unité de détermination de condensat (17) étant conçu pour déterminer la formation de condensat en outre en fonction desdites données météorologiques.

8. Dispositif de ventilation (1) selon l'une des revendications précédentes, présentant en outre une unité d'information (30), en particulier un affichage du dispositif de ventilation (1) et/ou une interface de communication permettant une communication sans fil et/ou par câble par exemple avec un terminal d'un utilisateur, l'unité d'information (30) étant conçue pour communiquer à l'utilisateur des informations relatives au condensat.

9. Dispositif de ventilation (1) selon la revendication 8, dans lequel l'unité d'information (30) est conçue pour communiquer à l'utilisateur au moins une des recommandations d'action suivantes en fonction du condensat déterminé :
- raccorder l'évacuation de condensat (40),
- arrêter le dispositif de ventilation (1),
- ajouter de l'eau destinée à un siphon (42),
- retirer l'évacuation de condensat (40),
- vider l'évacuation de condensat (40).

10. Procédé de régulation d'un dispositif de ventilation (1), en particulier d'un dispositif central de ventilation résidentiel avec récupération de chaleur, comprenant
- une voie d'air entrant (7),
- une voie d'air sortant (6),
- un échangeur de chaleur (2) destiné à la transmission de chaleur entre un flux d'air entrant de la voie d'air entrant (7) et un flux d'air sortant de la voie d'air sortant (6),
- un capteur de température d'air entrant (12) et un capteur d'humidité d'air entrant (13) qui sont disposés dans la voie d'air entrant (7),
- un capteur de température d'air sortant (14) et un capteur d'humidité d'air sortant (15) qui sont disposés dans la voie d'air sortant (6),
- un système de régulation avec unité de détermination de condensat (17), qui détermine la formation de condensat en fonction de données du capteur de température d'air entrant (12), du capteur d'humidité d'air entrant (13), du capteur de température d'air sortant (14) et du capteur d'humidité d'air sortant (15), le dispositif de ventilation (1) étant régulé en fonction de la formation de condensat déterminée par le système de régulation avec unité de détermination de condensat (17), le système de régulation avec unité de détermination de condensat (17) étant conçu pour réguler le dispositif de ventilation (1), l'unité de régulation étant configurée pour réguler le dispositif de ventilation (1) en fonction du condensat déterminé par le système de régulation avec unité de détermination de condensat (17), **caractérisé en ce que**
le débit volumique de l'air transporté dans le dispositif de ventilation (1) est réglable et est fourni au système de régulation avec unité de détermination de condensat (17), le système de régulation avec unité de détermination de condensat (17) étant conçu pour déterminer une quantité de formation de condensat en fonction du débit volumique.
